# EUROPÄISCHE PATENTSCHRIFT

(11) **EP 1 927 623 B1**
(45) Veröffentlichungstag und Bekanntmachung des Hinweises auf die Patenterteilung: **10.03.2010**
(21) Anmeldenummer: 07121900.0
(22) Anmeldetag: 29.11.2007
(51) Int. Cl.: C08K 5/00

(54) **Verfahren zur Steuerung der Scorch-Zeit (ST) bei der Vulkanisation von Kieselsäure gefüllten Kautschukmischungen**
Method for controlling the scorch time (ST) during the vulcanisation of rubber mixtures filled with silicic acid
Procédé destiné au contrôle du temps Scorch (ST) durant la vulcanisation de mélanges de caoutchouc chargés en silice

(30) Priorität: 30.11.2006 EP 06125114
(43) Veröffentlichungstag der Anmeldung: 04.06.2008
(73) Patentinhaber: Grillo Zinkoxid GmbH, 38664 Goslar (DE)
(72) Erfinder: Diekstall, Klaus, 38642, Goslar (DE); Jahn, Burkhardt, 38667, Bad Harzburg (DE); Schubert, Peter, 38690, Liebenburg (DE); Hessdörfer, Sven, 97753, Karlburg (DE)
(74) Vertreter: Meyers, Hans-Wilhelm

(56) Entgegenhaltungen:
- EP-A- 1 142 896
- WO-A-01/88027

## Beschreibung

Die vorliegende Erfindung betrifft ein Verfahren zur Steuerung der Scorch-Zeit (ST) bei der Vulkanisation von vulkanisierbaren Mischungen sowie dessen Anwendung in einem Verfahren zur Herstellung vulkanisierter Kautschukartikel.

Die Anvulkanisationszeit (Scorchzeit) einer Kautschukmischung ist ein Maß für die Temperaturstabilität der Mischung. Über die Temperaturstabilität können die Verarbeitungsbedingungen einer Kautschukmischung abgeleitet werden. Grundsätzlich werden Kautschukmischungen bei ihrer Verarbeitung hohen mechanischen und damit thermischen Belastungen ausgesetzt, um zum Einen eine gute Verteilung der Mischungsbestandteile und zum Anderen hohe Durchsätze zu erreichen.

Neben der Verarbeitung hat die Anvulkanisationszeit eine große Bedeutung für die Vulkanisation von Reifen. Ein Reifen besteht aus einer Vielzahl von verschiedenen Mischungen, wobei jede unterschiedliche Funktionen erfüllt und damit eine eigene Rezeptur besitzt. Die einzelnen Mischungen werden zusammengefügt (belegt) und gemeinsam in einer Presse vulkanisiert. Dabei müssen alle Mischungen etwa die gleiche Anvulkanisationszeit besitzen und zum selben Zeitpunkt ihre optimale Vernetzungsdichte erreicht haben, um die spezifischen Eigenschaften der Mischung zu erhalten.

Die Einstellung der Vulkanisationseigenschaften geschieht im allgemeinen durch Variation der Beschleuniger bzw. Beschleunigeranteile und den Einsatz von Verzögerern (Retarder).

Insbesondere Silica-Silan gefüllte Systeme weisen eine schnelle Anvulkanisation auf. Silica (Kieselsäure) ist neben Ruß ein verstärkender Füllstoff, welcher die mechanischen Eigenschaften einer Gummimischung verbessert. Durch den Einsatz von Silica-Silan Systemen gelang es, das Eigenschaftsbild eines Reifens bezüglich Nassrutsch und Rollwiderstand zu erweitern.

Die Verbesserung des Eigenschaftsbildes erklärt sich durch die unterschiedlichen Verstärkungsmechanismen der beiden Füllstoffe. Ruße sind wie die Polymere der Reifenkautschuke unpolar und bilden sekundäre Bindungen mit dem Polymer aus. Neben dieser Verstärkung bilden Füllstoffe ab einem gewissen Füllgrad (Perkolationsschwelle) ein Füllstoff-Füllstoff-Netzwerk aus, welches ebenfalls der Verstärkung dient.

Silica ist im Gegensatz zu Ruß ein polarer Füllstoff. Durch seine Polarität wird ein sehr starkes Füllstoff-Füllstoff-Netzwerk gebildet. Jedoch ist die Anbindung der Polymere an die Silicaoberfläche sehr gering. Der Durchbruch als Füllstoff gelang erst durch Silane, welche kovalente Bindungen zwischen der Silicaoberfläche und dem Polymer bilden.

Durch die direkte Anbindung des Polymers an den Füllstoff wird die Beweglichkeit der Polymerketten eingeschränkt, was zu einer Erniedrigung der Entropieelastizität führt. Durch die niedrigere Entropieelastizität wird bei dynamischer Belastung weniger Energie in Wärme umgewandelt, was zu einem verbesserten Rollwiderstand führt.

Silica-Silan gefüllte Systeme werden vorzugsweise in PKW-Laufflächenmischungen eingesetzt. Der Gewichtsanteil der Laufflächenmischung bei einem PKW-Reifen beträgt etwa 50 %.

Die EP-A-1142896 betrifft Kautschukmischungen, in denen Organosiliciumtriazinverbindungen eingesetzt werden. Über die Steuerung der Scorch-Zeit wird jedoch keinerlei verwertbare Information gegeben. Ebenso verhält sich dies bei der WO-A-01/88027, in der Amidverbindungen, die in Siliziumoxid verstärkten Gummimischungen zur Verbesserung der Verarbeitbarkeit beschrieben werden.

EP 1 142 896 A offenbart Organosilizium-Verbindungen, welche als technischer Hilfsstoff in Kautschukmischungen eingesetzt werden können.

Ferner offenbart WO 01/88027 A eine amidische Verbindung als technischer Hilfsstoff zur Verbesserung einer Dispersion in Kautschukmischungen.

Ein der Erfindung zu Grunde liegendes technisches Problem bestand darin, die Anvulkanisationszeit (Scorch-Zeit) bei der Vulkanisation vulkanisierbarer Mischungen zu steuern, um dem Verarbeiter eine größere Flexibilität bei der Herstellung von Vulkanisationsartikeln, insbesondere Reifen mit Silica-Silan gefüllten Produkten einzuräumen.

Gelöst wird das Problem durch ein Verfahren zur Steuerung der Scorch-Zeit (ST) bei der Vulkanisation von vulkanisierbaren Mischungen enthaltend eine zu vulkanisierende Zusammensetzung, hydrophobierte Kieselsäure sowie Zinkoxidpartikeln, wobei die Steuerung der Scorch-Zeit durch die Größe und Anzahl (Menge in phr - Teilen pro hundert) der Zinkoxidpartikel mit einer Partikelgröße von 10 nm bis 10 µm, insbesondere 100 nm bis 10 µm erfolgt.

Erfindungsgemäß gilt dabei, dass die Scorch-Zeit bei Anwesenheit von kleineren Zinkoxid partikeln im Vergleich zur Anwesenheit von größeren Zinkoxidpartikeln verlängert wird. Größere Zinkoxidpartikel in der verwendeten Zinkoxidpartikelfraktion führen zur Verkürzung der Scorchzeit relativ zur Anwesenheit von höheren Anteilen an kleineren Zinkoxid partikeln.

Die Größenangaben basieren auf Messungen mit einem Prüfgerät zur Partikelanalyse mittels Streulicht. Die Berechnung der Partikelgröße basiert dabei auf der Mie-Theorie, welche die Wechselwirkung zwischen Licht und Materie beschreibt (DIN/ISO 13320)

Die Oberfläche wird gemessen nach DIN 66131 (Bestimmung der spezifischen Oberfläche von Feststoffen durch Gasadsorption nach Brunauer, Emmett und Teller) bzw. nach DIN 66132 (Bestimmung der spezifischen Oberfläche von Feststoffen durch Stickstoffadsorption - Einpunkt-Differenzverfahren nach Haul und Dümbgen).

Die zur Steuerung der Scorch-Zeit einsetzbaren Zinkoxidpartikel weisen typischerweise eine spezifische Oberfläche von 1 m².g⁻¹ bis 100 m².g⁻¹, insbesondere 3 m².g⁻¹ bis 20 m².g⁻¹ auf.

In einer Ausführungsform des erfindungsgemäßen Verfahrens ist die zu vulkanisierende Zusammensetzung ein Dien-Kautschuk. Verwendung finden z. B. Dien-Kautschuke ausgewählt aus der Gruppe
- Naturkautschuk (NR)
- Polybutadien (BR)
- Polyisopren (IR)
- Lösungs-Styrol-Butadien-Kautschuk (L-SBR)
- Emulsions-Styrol-Butadien-Kautschuk (E-SBR)
- Acrylnitril-Butadien-Kautschuk (NBR)
- Chloroprenkautschuk (CR)
- Halogen-Butylkautschuk (BIIR, CIIR)
- Ethylen-Propylen-Kautschuk (EPDM).

Vorteilhafterweise werden im Verfahren gemäß der Erfindung silanisierte hydrophobisierte Kieselsäuren eingesetzt. Insbesondere ist als hydrophobisierte Kieselsäure eine durch bi- oder monofunktionelles Silanisierungsmittel silanisierte Kieselsäure einsetzbar.

Ein bifunktionelles Silan zum Einsatz gemäß der Erfindung ist ein schwefelhaltiges Organosilan zur Anwendung in der Gummiindustrie in Kombination mit Silanolgruppen tragenden Füllstoffen. Es reagiert mit Silanolgruppen enthaltenden Füllstoffen während des Mischens sowie mit dem Polymer während der Vulkanisation unter Bildung kovalenter chemischer Bindungen (bifunktionell).

Ein monofunktionelles Organosilan dagegen reagiert nur mit den Silanolgruppen des tragenden Füllstoffes. Dies führt zur Bildung einer chemischen Bindung an die Füllstoffoberfläche.

Das erfindungsgemäße Steuerungsverfahren lässt sich in einem Verfahren zur Herstellung vulkanisierter Kautschukartikel anwenden.

Die Erfindung wird an Hand der folgenden Beispiele näher erläutert.

Untersucht wurden typische kieselsäuregefüllte Laufflächenmischungen, wie sie heute in der Reifenindustrie verwendet werden.

### Beispiel 1

Einfluß verschiedener Zinkoxide mit unterschiedlicher Korngröße bzw. BET-Oberfläche auf die Scorchzeit einer kieselsäuregefüllten Mischung. Die Kieselsäure wurde dabei mit einem bifunktionellen Silan (Silan X50S von Degussa) vorbehandelt.

| | phr | phr | phr |
|---|---|---|---|
| Buna VSL 5025-0 HM | 50,0 | 50,0 | 50,0 |
| Buna CB 24 | 25,0 | 25,0 | 25,0 |
| SMR-L | 25,0 | 25,0 | 25,0 |
| Ultrasil 7000 GR | 75,0 | 75,0 | 75,0 |
| Silan X 50 S | 12,0 | 12,0 | 12,0 |
| Stearinsäure | 1,0 | 1,0 | 1,0 |
| Weichmacheröl 450 | 30,0 | 30,0 | 30,0 |
| Schwefel | 1,25 | 1,25 | 1,25 |
| Beschleuniger CBS | 1,8 | 1,8 | 1,8 |
| Beschleuniger DPG | 2,0 | 2,0 | 2,0 |
| Zinkoxid Typ1 | 1,0 | --- | --- |
| Zinkoxid Typ 2 | --- | 1,0 | --- |
| Zinkoxid Typ 3 | --- | --- | 1,0 |

Die Mischungsherstellung erfolgt in folgender Reihenfolge:

Der Masterbatch wurde mit einem Innenmischer (Werner & Pfleiderer GK 1,5E) zweistufig hergestellt.

Die Parameter bei der Herstellung des Masterbatches waren folgende:

### Parameter Innenmischer (Stufe 1):

Füllgrad: 70%
Starttemperatur: 60°C
Rotordrehzahl: 60U/min

### Mischzyklus:

0'00"-1'00": Polymere (Buna VSL 5025-0 HM, Buna CB 24, SMR-L)
1'00"-3'30": 2/3 Kieselsäure (Ultrasil 7000 GR), 2/3 Silan (X50S), Stearinsäure
3'30"-7'00": 1/3 Kieselsäure (Ultrasil 7000 GR), 1/3 Silan (X50S), Weichmacheröl (Weichmacheröl 450)
Parameter GK 1,5E (Stufe 2):
Füllgrad : 70%
Starttemperatur: 60°C
Rotordrehzahl: 60 U/min
Mischzeit: 5 Minuten

Schwefel und Vulkanisationsbeschleuniger wurden in einer dritten Mischstufe auf einem Walzwerk dem Masterbatch zugegeben.

### Parameter Walzwerk (Stufe 3):

Walzentemperatur: 60°C
Walzendrehzahl: 16:12 U/min
Mischzeit: 10 Minuten
0'00": Schwefel, Beschleuniger CBS, Beschleuniger DPG

Anschließend erfolgte die Aufteilung des Masterbatch und das Einmischen der verschiedenen Zinkoxid Typen 1, 2 und 3 auf einem Laborwalzwerk.

### Ergebnisse

| **Zinkoxid** | **Typ 1** | **Typ 2** | **Typ 3** |
|---|---|---|---|
| Scorchzeit Ts5 /Minuten | 10,42 | 11,17 | 12,98 |
| KGV d₅₀/µm | 1,25 | 1,02 | 0,22 |
| BET-Oberfläche /m^{2*}g⁻¹ | 3,8 | 5,6 | 8,8 |

### Beispiel 2 (monofunktionelles Silan)

Abhängigkeit der Scorchzeit von der Menge der eingesetzten Zinkoxid-Type. Es wurden die Mengenanteile des Zinkoxides um jeweils 0,5 phr erhöht. Die Kieselsäure wurde dabei mit einem monofunktionellen Silan (Silan Si 203 von Degussa) vorbehandelt.

Verwendet wurde das Zinkoxid Typ 1 mit einem d₅₀-Wert von 1,25 µm bzw. einer BET-Oberfläche von 3,8 m^{2*}g⁻¹.

### Charge 2

| | phr | phr | phr | phr | phr | phr | phr | phr | phr | phr |
|---|---|---|---|---|---|---|---|---|---|---|
| Buna VSL 5025-0 HM | 50,0 | 50,0 | 50,0 | 50,0 | 50,0 | 50,0 | 50,0 | 50,0 | 50,0 | 50,0 |
| Buna CB 24 | 25,0 | 25,0 | 25,0 | 25,0 | 25,0 | 25,0 | 25,0 | 25,0 | 25,0 | 25,0 |
| SMR-L | 25,0 | 25,0 | 25,0 | 25,0 | 25,0 | 25,0 | 25,0 | 25,0 | 25,0 | 25,0 |
| Ultrasil 7000 GR | 75,0 | 75,0 | 75,0 | 75,0 | 75,0 | 75,0 | 75,0 | 75,0 | 75,0 | 75,0 |
| Ruß N330 | 6,0 | 6,0 | 6,0 | 6,0 | 6,0 | 6,0 | 6,0 | 6,0 | 6,0 | 6,0 |
| Silan Si 203 | 4,6 | 4,6 | 4,6 | 4,6 | 4,6 | 4,6 | 4,6 | 4,6 | 4,6 | 4,6 |
| Stearinsäure | 1,0 | 1,0 | 1,0 | 1,0 | 1,0 | 1,0 | 1,0 | 1,0 | 1,0 | 1,0 |
| Weichmacheröl 450 | 30,0 | 30,0 | 30,0 | 30,0 | 30,0 | 30,0 | 30,0 | 30,0 | 30,0 | 30,0 |
| Schwefel | 1,25 | 1,25 | 1,25 | 1,25 | 1,25 | 1,25 | 1,25 | 1,25 | 1,25 | 1,25 |
| Beschleuniger | 1,8 | 1,8 | 1,8 | 1,8 | 1,8 | 1,8 | 1,8 | 1,8 | 1,8 | 1,8 |
| Beschleuniger CPCPS | 2,0 | 2,0 | 2,0 | 2,0 | 2,0 | 2,0 | 2,0 | 2,0 | 2,0 | 2,0 |
| Zinkoxid Typ 1 | 0,0 | 0,5 | 1,0 | 1,5 | 2,0 | 2,5 | 3,0 | 4,0 | 5,0 | 6,0 |

### Die Mischungsherstellung erfolgte in folgender Reihenfolge

Der Masterbatch wurde mit einem Innenmischer (Werner & Pfleiderer GK 1,5E) zweistufig hergestellt.

Die Parameter bei der Herstellung des Masterbatches waren folgende:

### Parameter Innenmischer (Stufe 1):

Füllgrad: 70%
Starttemperatur: 60°C
Rotordrehzahl: 60U/min
Mischzyklus:
0'00"-1'00": Polymere (Buna VSL 5025-0 HM, Buna CB 24, SMR-L)
1'00"-3'30": 2/3 Kieselsäure (Ultrasil 7000 GR), 2/3 Silan (Si 203), Stearinsäure, Ruß N330
3'30"-7'00": 1/3 Kieselsäure (Ultrasil 7000 GR), 1/3 Silan (Si 203), Weichmacheröl (Weichmacheröl 450)

### Parameter GK 1,5E (Stufe 2):

Füllgrad : 70%
Starttemperatur: 60°C
Rotordrehzahl: 60 U/min
Mischzeit: 5 Minuten

Schwefel und Vulkanisationsbeschleuniger wurden in einer dritten Mischstufe auf einem Walzwerk dem Masterbatch zugegeben.

### Parameter Walzwerk (Stufe 3):

Walzentemperatur: 60°C
Walzendrehzahl: 16:12 U/min
Mischzeit: 10 Minuten
0'00": Schwefel, Beschleuniger CBS, Beschleuniger DPG

Anschließend erfolgte ein Aufteilen des Batches und das Einmischen der verschiedenen Zinkoxid Konzentrationen.

### Ergebnisse

| | | | | | | | | | | |
|---|---|---|---|---|---|---|---|---|---|---|
| **ZnO Typ1** /phr | 0,0 | 0,5 | 1,0 | 1,5 | 2,0 | 2,5 | 3,0 | 4,0 | 5,0 | 6,0 |
| Ts5 /min | 7,96 | 10,9 | 13,78 | 15,39 | 17,08 | 17,78 | 18,32 | 18,8 | 19,66 | 20,59 |

### Beispiel 3 (bifunktionelles Silan)

Abhängigkeit der Scorchzeit von der Menge der eingesetzten Zinkoxid-Type. Es wurden die Mengenanteile des Zinkoxides um jeweils 0,5 phr erhöht. Die Kieselsäure wurde dabei mit einem bifunktionellen Silan (Silan X50S von Degussa) vorbehandelt.

Verwendet wurde das Zinkoxid Typ 3 mit einem d₅₀-Wert von 0,22 µm bzw. einer BET-Oberfläche von 8,8 m^{2*}g⁻¹.

| | phr | phr | phr | phr | phr | phr | phr | phr | phr | phr |
|---|---|---|---|---|---|---|---|---|---|---|
| Buna VSL 5025-0 HM | 50,0 | 50,0 | 50,0 | 50,0 | 50,0 | 50,0 | 50,0 | 50,0 | 50,0 | 50,0 |
| Buna CB 24 | 25,0 | 25,0 | 25,0 | 25,0 | 25,0 | 25,0 | 25,0 | 25,0 | 25,0 | 25,0 |
| SMR-L | 25,0 | 25,0 | 25,0 | 25,0 | 25,0 | 25,0 | 25,0 | 25,0 | 25,0 | 25,0 |
| Ultrasil 7000 GR | 75,0 | 75,0 | 75,0 | 75,0 | 75,0 | 75,0 | 75,0 | 75,0 | 75,0 | 75,0 |
| Silan X 50 S | 12,0 | 12,0 | 12,0 | 12,0 | 12,0 | 12,0 | 12,0 | 12,0 | 12,0 | 12,0 |
| Stearinsäure | 1,0 | 1,0 | 1,0 | 1,0 | 1,0 | 1,0 | 1,0 | 1,0 | 1,0 | 1,0 |
| Weichmacherö1450 | 30,0 | 30,0 | 30,0 | 30,0 | 30,0 | 30,0 | 30,0 | 30,0 | 30,0 | 30,0 |
| Schwefel | 1,25 | 1,25 | 1,25 | 1,25 | 1,25 | 1,25 | 1,25 | 1,25 | 1,25 | 1,25 |
| Beschleuniger | 1,8 | 1,8 | 1,8 | 1,8 | 1,8 | 1,8 | 1,8 | 1,8 | 1,8 | 1,8 |
| Beschleuniger CPCPS | 2,0 | 2,0 | 2,0 | 2,0 | 2,0 | 2,0 | 2,0 | 2,0 | 2,0 | 2,0 |
| Zinkoxid Typ 3 | 0,0 | 0,5 | 1,0 | 1,5 | 2,0 | 2,5 | 3,0 | 4,0 | 5,0 | 6,0 |

### Charge 3

### Die Mischungsherstellung erfolgt in folgender Reihenfolge:

Der Masterbatch wurde mit einem Innenmischer (Werner & Pfleiderer GK 1,5E) zweistufig hergestellt.

Die Parameter bei der Herstellung des Masterbatches waren folgende:

### Parameter Innenmischer (Stufe 1):

Füllgrad: 70%
Starttemperatur: 60°C
Rotordrehzahl: 60U/min
Mischzyklus:
0'00"-1'00": Polymere (Buna VSL 5025-0 HM, Buna CB 24, SMR-L)
100"-3'30": 2/3 Kieselsäure (Ultrasil 7000 GR), 2/3 Silan (X50S), Stearinsäure
3'30"-7'00": 1/3 Kieselsäure (Ultrasil 7000 GR), 1/3 Silan (X50S), Weichmacheröl (Weichmacheröl 450)

### Parameter GK 1,5E (Stufe 2):

Füllgrad : 70%
Starttemperatur: 60°C
Rotordrehzahl: 60 U/min
Mischzeit: 5 Minuten

Schwefel und Vulkanisationsbeschleuniger wurden in einer dritten Mischstufe auf einem Walzwerk dem Masterbatch zugegeben.

### Parameter Walzwerk (Stufe 3):

Walzentemperatur: 60°C
Walzendrehzahl: 16:12 U/min
Mischzeit: 10 Minuten
0'00": Schwefel, Beschleuniger CBS, Beschleuniger DPG

Anschließend erfolgte die Aufteilung des Masterbatches und das Einmischen der verschiedenen Zinkoxid Konzentrationen.

### Ergebnisse

| | | | | | | | | | | |
|---|---|---|---|---|---|---|---|---|---|---|
| **ZnO Typ3/**phr | 0,0 | 0,5 | 1,0 | 1,5 | 2,0 | 2,5 | 3,0 | 4,0 | 5,0 | 6,0 |
| Ts5 /min | 6,37 | 9,44 | 12,98 | 15,63 | 14,62 | 15,28 | 14,71 | 14,90 | 15,86 | 15,53 |

## Patentansprüche

1. Verfahren zur Steuerung der Scorch-Zeit (ST) bei der Vulkanisation von vulkanisierbaren Mischungen enthaltend eine zu vulkanisierende Zusammensetzung, hydrophobisierte Kieselsäure sowie Zinkoxidpartikeln, wobei die Steuerung der Scorch-Zeit durch die Größe und Anzahl der Zinkoxidpartikel erfolgt, wobei die Zinkoxidpartikel eine Partikelgröße von 10 nm bis 10 µm aufweisen.

2. Verfahren nach Anspruch 1, wobei die Scorch-Zeit bei Anwesenheit von kleineren Zinkoxidpartikeln im Vergleich zur Anwesenheit von größeren Zinkoxidpartikeln verlängert wird.

3. Verfahren nach Anspruch 1, wobei die Scorch-Zeit in Abhängigkeit von der Menge des eingesetzten Zinkoxides gesteuert wird.

4. Verfahren nach Anspruch 3, wobei die Verlängerung der Scorchzeit durch Erhöhung der Zinkoxidanteile in der vulkanisierbaren Mischung erfolgt.

5. Verfahren nach einem der vorangehenden Ansprüche, wobei die zur Steuerung der Scorch-Zeit eingesetzten Zinkoxidpartikel eine Partikelgröße von 100 nm bis 10 µm aufweisen.

6. Verfahren nach einem der vorangehenden Ansprüche, wobei die zur Steuerung der Scorch-Zeit eingesetzten Zinkoxidpartikeln eine spezifische Oberfläche von 1 m²*g⁻¹ bis 100 m²*g⁻¹, insbesondere 3 m²*g⁻¹ bis 20 m²*g⁻¹ aufweisen.

7. Verfahren nach einem der vorangehenden Ansprüche, wobei die zu vulkanisierende Zusammensetzung ein Dien-Kautschuk ist.

8. Verfahren nach Anspruch 6, wobei der Dien-Kautschuk ausgewählt ist aus der Gruppe Naturkautschuk (NR), Polybutadien (BR), Polyisopren (IR), Lösungs-Styrol-Butadien-Kautschuk (L-SBR), Emulsions-Styrol-Butadien-Kautschuk (E-SBR), Acrylnitril-Butadien-Kautschuk (NBR), Chloroprenkautschuk (CR), Halogen-Butylkautschuk (BIIR, CIIR), Halogen-Butylkautschuk (BIIR, CIIR) sowie Ethylen-Propylen-Kautschuk (EPDM).

9. Verfahren nach einem der vorangehenden Ansprüche, wobei die hydrophobisierte Kieselsäure silanisiert ist.

10. Verfahren nach Anspruch 8, wobei die hydrophobisierte Kieselsäure durch ein bi- oder monofunktionelles Silanisierungsmittel silanisiert ist.

11. Verfahren zur Herstellung vulkanisierter Kautschukartikel, wobei die Scorch-Zeit gemäß dem Verfahren nach mindestens einem der Ansprüche 1 bis 9 eingestellt wird.

## Claims

1. A process for controlling the scorch time (ST) in the vulcanization of vulcanizable blends containing a composition to be vulcanized, hydrophobized silicic acid and zinc oxide particles, wherein the scorch time control is effected by the size and number of zinc oxide particles, the zinc oxide particles having a particle size of from 10 nm to 10 µm.

2. The process according to claim 1, wherein the scorch time is prolonged in the presence of smaller zinc oxide particles as compared to the presence of larger zinc oxide particles.

3. The process according to claim 1, wherein the scorch time is controlled as a function of the amount of zinc oxide employed.

4. The process according to claim 3, wherein the prolonging of the scorch time is effected by increasing the proportion of zinc oxide in the vulcanizable blend.

5. The process according to any one of the preceding claims, wherein the zinc oxide particles used for controlling the scorch time have a particle size of from 100 nm to 10 µm.

6. The process according to any one of the preceding claims, wherein the zinc oxide particles used for controlling the scorch time have a specific surface area of from 1 m²·g⁻¹ to 100 m²·g⁻¹, in particular from 3 m²·g⁻¹ to 20 m²·g⁻¹.

7. The process according to any one of the preceding claims, wherein the composition to be vulcanized is a diene rubber.

8. The process according to claim 6, wherein the diene rubber is selected from the group of natural rubber (NR), polybutadiene (BR), polyisoprene (IR), solution styrene butadiene rubber (SSBR), emulsion styrene butadiene rubber (ESBR), acrylonitrile butadiene rubber (NBR), chloroprene rubber (CR), halogenated butyl rubber (BIIR, CIIR) and ethylene propylene rubber (EPDM).

9. The process according to any one of the preceding claims, wherein the hydrophobized silicic acid is silanized.

10. The process according to claim 8, wherein the hydrophobized silicic acid has been silanized by a bi- or monofunctional silanizing agent.

11. A process for preparing vulcanized rubber articles, wherein the scorch time is adjusted by a process according to at least one of claims 1 to 9.

## Revendications

1. Procédé de maîtrise du temps de grillage (ST) lors de la vulcanisation de mélanges vulcanisables contenant une composition à vulcaniser, de l'acide silicique hydrophobisé ainsi que des particules d'oxyde de zinc, dans lequel la maîtrise du temps de grillage est obtenue par l'intermédiaire de la taille et du nombre de particules d'oxyde de zinc, dans lequel les particules d'oxyde de zinc présentent une taille de particules allant de 10 nm à 10 µm.

2. Procédé selon la revendication 1, dans lequel le temps de grillage est prolongé en présence de particules d'oxyde de zinc de plus petite taille par rapport à la présence de particules d'oxyde de zinc de plus grande taille.

3. Procédé selon la revendication 1, dans lequel on maîtrise le temps de grillage en fonction de la quantité d'oxyde de zinc mis en oeuvre.

4. Procédé selon la revendication 3, dans lequel la prolongation du temps de grillage est obtenue en augmentant la teneur en oxyde de zinc dans le mélange vulcanisable.

5. Procédé selon l'une quelconque des revendications précédentes, dans lequel les particules d'oxyde de zinc mises en oeuvre pour la maîtrise du temps de grillage présentent une taille de particules allant de 100 nm à 10 µm.

6. Procédé selon l'une quelconque des revendications précédentes, dans lequel les particules d'oxyde de zinc mises en oeuvre pour maîtriser le temps de grillage présentent une surface spécifique de 1 m².g⁻¹ à 100 m².g⁻¹, en particulier de 3 m².g⁻¹ à 20 m².g⁻¹.

7. Procédé selon l'une quelconque des revendications précédentes, dans lequel la composition à vulcaniser est un caoutchouc diène.

8. Procédé selon la revendication 6, dans lequel le caoutchouc diène est choisi dans le groupe formé par le caoutchouc naturel (NR), le polybutadiène (BR), le polyisoprène (IR), le caoutchouc en solution styrène-butadiène (L-SBR), le caoutchouc en émulsion styrène-butadiène (E-SBR), le caoutchouc acrylonitrile-butadiène (NBR), le caoutchouc chloroprène (CR), le caoutchouc butyle halogéné (BIIR, CIIR), ainsi que le caoutchouc éthylène-propylène (EPDM).

9. Procédé selon l'une quelconque des revendications précédentes, dans lequel l'acide silicique hydrophobisé est silanisé.

10. Procédé selon la revendication 8, dans lequel l'acide silicique hydrophobisé est silanisé au moyen d'un agent de silanisation bi- ou monofonctionnel.

11. Procédé de fabrication d'articles en caoutchouc vulcanisé, dans lequel le temps de grillage est ajusté conformément au procédé selon au moins l'une quelconque des revendications 1 à 9.
